# EUROPEAN PATENT SPECIFICATION

(11) **EP 2 073 432 B1**
(45) Date of publication and mention of the grant of the patent: **16.11.2011**
(21) Application number: 07816954.7
(22) Date of filing: 25.09.2007
(51) Int. Cl.: H04L 9/32, H04L 29/06, H04L 12/28

(54) **Method for binding an access terminal to an operator and corresponding access terminal**
Verfahren zum Binden eines Zugangsendgerätes an einen Betreiber und entsprechendes Zugangsendgerät
Procédé de liaison entre un terminal et un opérateur, et terminal correspondant

(30) Priority: 25.09.2006 CN 200610062834
(43) Date of publication of application: 24.06.2009
(73) Proprietor: Huawei Technologies Co., Ltd., Longgang District, Shenzhen Guangdong 518129 (CN)
(72) Inventor: ZHANG, Ke, Shenzhen Guangdong 518-129 (CN)
(74) Representative: Thun, Clemens
(86) International application number: PCT/CN2007/070763
(87) International publication number: WO 2008/037213

(56) References cited:
- EP-A2- 0 840 480
- CN-A- 1 422 031
- CN-A- 1 525 685
- CN-A- 1 728 637
- CN-A- 1 925 394
- GB-A- 2 335 568
- JP-A- 2003 143 126
- US-A1- 2005 037 732
- US-A1- 2005 160 466
- US-A1- 2006 031 407

## Description

### FIELD OF THE INVENTION

The present invention relates to a technical field of x digital subscriber line (xDSL), and more particularly to a technology for binding an access terminal to an operator in an asymmetric digital subscriber loop (ADSL).

### BACKGROUND OF THE INVENTION

A point-to-point protocol (PPP) provides a whole set of solutions for problems such as link establishment, link maintenance, link removal, upper layer protocol negotiation, and authentication. The PPP includes a link control protocol (LCP), a network control protocol (NCP), and an authentication protocol. The authentication protocol mainly includes a password authentication protocol (PAP) and a challenge-handshake authentication protocol (CHAP).

A typical link establishment process in the PPP is divided into three phases: an establishment phase, an authentication phase, and a network negotiation phase.

The LCP is responsible for establishing a link, and a basic communication mode is selected in this phase. Equipments at two ends of the link transmit configure packets to each other through the LCP. Once a Configure-Ack packet is sent and received, an exchange is completed, and the LCP enters an opened state.

During the authentication phase, a client sends its identity information to a remote access server. In this phase, a secure authentication mode is adopted to prevent a third party from stealing data or pretending as a remote client to take over the connection with the client. Advancement from the authentication phase to a network-layer protocol phase must not occur until the authentication is completed. If the authentication fails, the authenticator should jump to a link termination phase.

The most commonly used authentication protocols include PAP and CHAP. The PAP is a simple, plain-text authentication scheme. When a network access server (NAS) requires a user to provide a user name and a password, the PAP returns user information in plain text. The CHAP is an encrypted authentication scheme capable of avoiding transmission of the actual password of the user during the establishment of the connection. The NAS sends a challenge including a session ID and an arbitrary challenge string to a remote client. The remote client must use an MD5 one-way hashing algorithm to return the user name and an encryption of the challenge, session ID, and the user's password, and wherein the user name is sent in an unhashed way.

After the authentication phase is finished, the PPP invokes various NCPs that were selected during the link establishment phase. The selected NCPs solve the upper-layer protocol problems on the PPP link. For example, during this phase, the IP control protocol can assign a dynamic address to a dial-in user.

The PPP is one of protocols that are most widely applied in the wide area network (WAN), and is advantageous in being simple, having a user authentication capability, and being capable of handling IP assignment.

Home dial-up access is to establish a communication link between a client and an access server of an operator through the PPP. With the rapid progress in the broadband access technology, new applications of the PPP are derived. Typically, in an asymmetric digital subscriber loop (ADSL) access mode, the PPP together with other protocols derives new protocols that satisfy the broadband access requirements, for example, PPP over Ethernet (PPPoE) and PPP over ATM (PPPoA).

PPPoE is a manner of running the PPP over the Ethernet to perform the user authentication access by using the Ethernet resources. The PPPoE not only protects the Ethernet resources of the user side, but also satisfies the xDSL access requirements, and thus becomes the most widely applied technical standard among current xDSL access modes.

In the current communication technology, xDSL has become the mainstream of broadband access for families and small-scale enterprises. A digital subscriber line (DSL) technology is a high-speed transmission technology of transmitting data through a telephone twisted pair, i.e., an unshielded twisted pair (UTP), and the xDSL includes ADSL, very-high-bit-rate digital subscriber line (VDSL), ISDN digital subscriber line (IDSL) based on integrated services digital network (ISDN), and single-pair high-bit-rate digital subscriber line (SHDSL), etc.

The most common manner for the xDSL access is by logging on an operator network through PPPoE dial-up. In this case, the access terminal usually operates in two modes: the route mode and the bridge mode.

In the route mode, the PPPoE dial-up is initiated by a Modem. The Modem obtains a public network IP address and assigns private network IP addresses to equipment, such as personal computers (PCs), in a home network. The Modem also provides a route forward service.

In the bridge mode, the PPPoE dial-up is initiated by a PC or a router in a home network. The dial-up initiator obtains an IP address, and the Modem only provides a data path without forwarding data or performing any other processing.

Here, the Modem refers to an access terminal for the xDSL access mode, such as a remote terminal unit (RTU) or a home gateway (HGW).

Currently, to attract more xDSL users, most operators reward service subscribers with free access terminals. However, due to the competition between the operators, some operators may adopt a preferential policy of "access with a modem" (i.e., the user may access a network through a self-provided access terminal), so as to draw user resources from other operators. Thereby, a user may receive a free access terminal from one operator, and access the network of another operator by means of "access with a modem", thus resulting in vicious competition between the operators.

The operators, especially those rewarding their subscribers with free access terminals, hope there is a reasonable way to bind the access terminal with the access network, so as to technically restrict the users from using the access terminal to access networks of other operators and thus protect their own benefits. However, so far no solution is provided in this field.
The document EP 0840480 A2 shows a method of authentication: A verifier generates a random number and transmits it to a claimant. The claimant performs a data conversion using a key and transmits the result back to the verifier. The verifier performs the same data conversion and compares the result to the received result from the claimant. If the two results are different the verifier does not authorize the claimant. The authentication system is used for an optical disc drive to authenticate an image reproduction device.

### SUMMARY OF THE INVENTION

Accordingly, the present invention is directed to an access terminal and a method for binding the access terminal to an operator, so as to solve the problem of being incapable of binding an access terminal to an operator that provides the access terminal.

In order to achieve the above objective, the present invention adopts the following technical solutions.

A method for binding an access terminal to an operator is provided, which includes the following steps.

sending, by the access terminal, a packet carrying private information to a broadband access server (BAS);

receiving, by the access terminal, a response packet returned by the BAS, wherein the response packet carries encrypted private information obtained by the BAS in accordance with an agreed encryption algorithm;

encrypting, by the access terminal, the private information using the agreed encryption algorithm; and

comparing, by the access terminal, the encrypted private information obtained by the access terminal using the agreed encryption algorithm with the encrypted private information carried in the response packet, and if the two are different, a dial-up process to the BAS being ended or a link to the BAS being removed.
The sending a packet carrying private information to the BAS further includes sending, by the access terminal, a link control protocol (LCP) packet to the BAS, wherein the LCP packet carries the private information.
The receiving a response packet returned by the BAS further includes receiving, by the access terminal, an LCP response packet from the BAS, wherein the LCP response packet carries the encrypted private information obtained in the BAS by encrypting the private information using the agreed encryption algorithm.

An access terminal is provided, which includes a private information transmission module and a determination processing module.

The private information transmission module is adapted to send a packet carrying private information to a BAS, and receive a response packet returned by the BAS. The response packet carries encrypted private information obtained by the BAS in accordance with an agreed encryption algorithm.

The determination processing module is adapted to determine whether or not the encrypted private information carried in the response packet is identical to the encrypted private information obtained by the access terminal using an agreed encryption algorithm, and if not, end a dial-up process to the BAS or remove a link to the BAS.
The packet is a link control protocol (LCP) packet, and the response packet is an LCP response packet.

To overcome the deficiencies in the prior art, according to the present invention, during the interaction of a modem and a BAS, the BAS receives a packet from the modem, encrypts the private information in the packet using an agreed algorithm, and then returns the encrypted private information to the modem through an LCP response packet. The modem encrypts the original private information using the agreed algorithm, and compares the encrypted private information with the encrypted private information returned by the BAS. If the two are different, a PPPoE dial-up process is ended or an established link is removed. The technical solutions of the present invention can effectively prevent the user from using an access terminal provided by the current operator to access networks of other operators, so as to avoid vicious competition between the operators. Moreover, the present invention is simply achieved without changing the networking mode or the user's habit, and has no extra demand of service distribution.

### BRIEF DESCRIPTION OF THE DRAWING

FIG. 1 is a flow chart of a first embodiment according to the present invention;

FIG. 2 is a flow chart of a second embodiment according to the present invention; and

FIG. 3 is a schematic structural view of an access terminal according to an embodiment of the present invention.

### DETAILED DESCRIPTION OF THE EMBODIMENTS

The present invention provides an access terminal and a method for binding the access terminal to an operator.

According to the present invention, during the interaction of a modem and a broadband access server (BAS), the BAS receives a packet from the modem, encrypts private information in the packet using an agreed algorithm, and then returns the encrypted private information to the modem through an LCP response packet. The modem encrypts the original private information using the agreed encryption algorithm, and compares the encrypted private information with the encrypted private information returned by the BAS. If the two are different, a PPPoE dial-up process is ended or an established link is removed.

First of all, a user-defmed option entry needs to be extended in a link control protocol (LCP) for carrying private information in an LCP packet and performing a BAS authentication. This option entry must be identifiable at the two ends of the PPP.

A format of the option entry is as shown in Table 1 below. In the format, a Type field represents the type of a private parameter, and may be, for example, 0x66; a Length field represents the length of the private parameter; and a Data field is defined as the content of the private parameter, and may be, for example, a character string.

During an LCP negotiation process or in an LCP heart-beat packet, the modem generates a random character string, sets the random character string in the option entry, and sends the option entry to the BAS. The BAS encrypts the random character string using a particular algorithm (for example, the BAS may encrypt the random character string by using a user name as a key), and returns the encrypted character string to the modem through the above option entry. The modem encrypts the above generated random character string using an agreed encryption algorithm, and compares the result with the encrypted random character string returned by the BAS. If the two are identical, it indicates that the modem and the BAS use the same encryption algorithm, and that the modem is provided by the operator of the access network; if the two are different, it indicates that the modem and the BAS use different encryption algorithms, and that the modem is not provided by the operator of the accessed network, thus the PPP connection is disconnected.

**Table 1**

| Type | Length | Data |
|---|---|---|
| 66 | xxx | Character string |

The technical solutions are described in detail below through embodiments with reference to the accompanying figures.

Embodiment 1: identifying a network to be accessed by private information in a route mode

In the route mode, a PPPoE dial-up process is initiated by a modem. The modem randomly generates a Data character string, sets the random character string in the option entry, and adds the option entry to an LCP packet.

On receiving the LCP packet, a BAS encrypts the Data character string, and returns the encrypted Data character string to the modem through a response packet. The modem encrypts the above generated Data character string using an encryption algorithm agreed with the BAS, and compares the encrypted Data character string with the Data field returned by the BAS. If the two are different, the modem removes the link to the BAS.

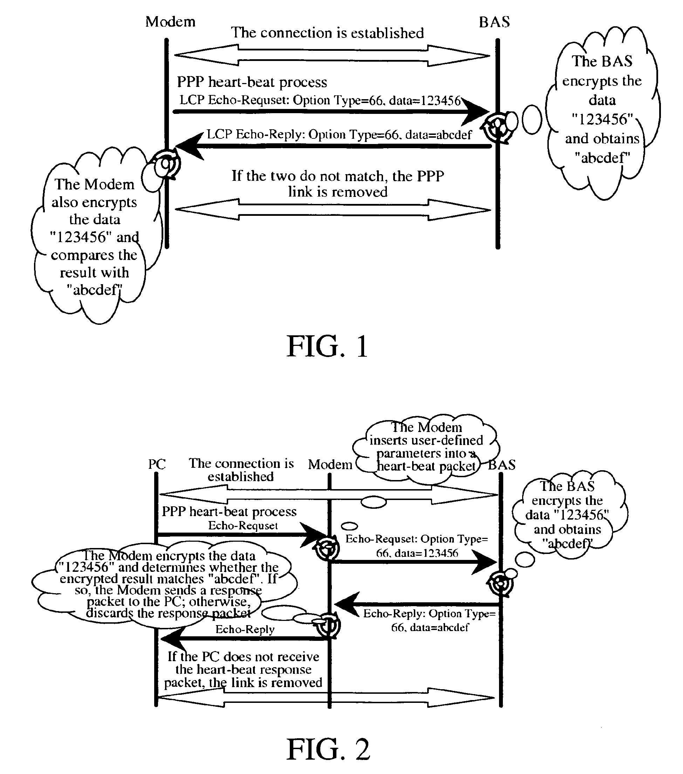

A PPP heart-beat packet is taken as an example to illustrate the above process, and the flow chart is as shown in FIG. 1.

1. After a connection is established, the modem sends a heart-beat packet carrying a user-defined option with an option TYPE=66 to the BAS, and randomly generates Data character string "123456".

2. The BAS encrypts the Data character string "123456" to generate "abcdef".

3. The BAS returns a heart-beat response packet carrying a user-defined option with an option TYPE=66, and Data=abcdef.

4. The modem encrypts "123456" by an encryption algorithm agreed with the BAS, and determines whether the result is "abcdef" or not. If not, Step 5 is performed.

5. The modem removes the link to the BAS.

Embodiment 2: identifying a network to be accessed by private information in a bridge mode

In the bridge mode, a PPPoE dial-up process is initiated by a PC, and a PPP detection point is added in the bridge processing flow to intercept and parse PPP packets. If the packet is an upstream data packet, the modem inserts an extended parameter into the original packet and sends the packet to the BAS for authentication. If the packet is a downstream data packet, the modem verifies the packet first, and then strips off the extended parameter, and sends the packet to the PC.

Likewise, a PPP heart-beat packet is taken as an example to illustrate the above process, and the flow chart is as shown in FIG. 2.

1. The PC sends a heart-beat packet to the BAS. The modem, on detecting the PPP packet, intercepts and parses the packet, inserts a user-defined option with an option TYPE=66 into the heart-beat packet. The randomly generated Data is "123456", and the modem forwards the Data to the BAS.

2. The BAS encrypts "123456" to generate "abcdef".

3. The BAS returns a heart-beat response packet carrying a user-defined option with an option TYPE=66, and Data=abcdef.

4. The modem intercepts the heart-beat response packet, extracts the Data character string from the packet, encrypts "123456" using an agreed encryption algorithm, and determines whether the result is "abcdef" or not. If not, Step 5 is performed.

5. The modem discards the heart-beat response packet.

6. When the PC does not receive the heart-beat response packet, the PC automatically removes the link to the BAS.

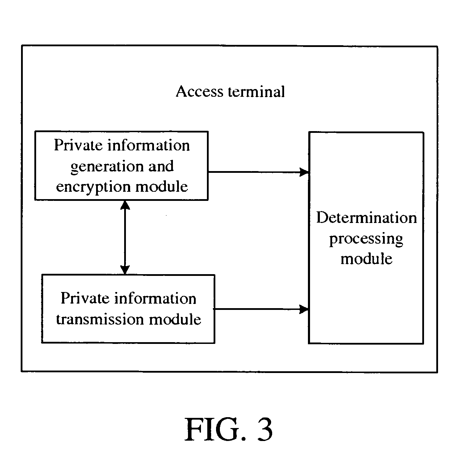

FIG. 3 shows a structure of an access terminal according to an embodiment of the present invention. The access terminal includes a private information generation and encryption module, a private information transmission module, and a determination processing module.

The private information generation and encryption module is adapted to generate a random character string as private information of the access terminal, and to encrypt the random character string using an agreed encryption algorithm.

The private information transmission module is adapted to send a packet carrying the private information to a BAS, and receive a response packet returned by the BAS. The response packet carries encrypted private information obtained by the BAS in accordance with an agreed encryption algorithm.

The determination processing module is adapted to determine whether or not the encrypted private information carried in the response packet is identical to encrypted private information obtained by the access terminal using an agreed encryption algorithm, and if not, end a dial-up process to the BAS or remove a link to the BAS.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for binding an access terminal to an operator, **characterised by** comprising:
sending, by the access terminal, a link control protocol LCP packet carrying private information ("123456") to a broadband access server BAS;
receiving, by the access terminal, an LCP response packet from the BAS, wherein the LCP response packet carries encrypted private information ("abcdef") obtained in the BAS by encrypting the private information using an agreed encryption algorithm;
encrypting, by the access terminal, the private information using the agreed encryption algorithm; and
comparing, by the access terminal, the encrypted private information ("abcdef") obtained by the access terminal using the agreed encryption algorithm with the encrypted private information carried in the response packet, and if the two are different, a dial-up process to the BAS being ended or a link to the BAS being removed,
wherein the LCP packet is a point-to-point protocol (PPP) heart-beat packet.

2. The method according to claim 1, **characterized in that**, before sending the LCP packet carrying the private information to the BAS, further comprises:
intercepting, by the access terminal, a LCP packet to the BAS from a client, and inserting the private information into the intercepted LCP packet.

3. The method according to claim 2, **characterized in that**,
the dial-up process to the BAS being ended or the link to the BAS being removed further comprises:
discarding, by the access terminal, the LCP response packet; and
ending the dial-up process or removing the link, by the client, when the LCP response packet is not received.

4. The method according to claim 1 or 2, **characterized in that** the private information is carried by an option entry of the LCP packet.

5. The method according to any one of claims 1 to 4, **characterized in that** the private information is a character string randomly generated by the access terminal.

6. An access terminal, **characterised by** comprising:
a private information transmission module, adapted to send a packet carrying private information ("123456") to a broadband access server BAS, and receive a response packet returned by the BAS, wherein the response packet carries encrypted private information ("abcdef") obtained by the BAS in accordance with an agreed encryption algorithm; and
a determination processing module, adapted to determine whether or not the encrypted private information carried in the response packet is identical to encrypted private information ("abcdef") obtained by the access terminal using an agreed encryption algorithm, and if not, end a dial-up process to the BAS or remove a link to the BAS;
wherein the packet is a link control protocol LCP packet, the response packet is an LCP response packet, and the LCP packet is a point-to-point protocol (PPP) heart-beat packet.

7. The access terminal according to claim 6, **characterized by** further comprising:
a private information generation and encryption module, adapted to generate a random character string as the private information of the access terminal, and encrypt the random character string using an agreed encryption algorithm.

8. The access terminal according to claim 6 or 7, wherein the access terminal is a remote terminal unit (RTU) or a home gateway (HGW).

## Patentansprüche

1. Verfahren zum Binden eines Zugangsendgeräts mit einem Betreiber, **gekennzeichnet durch** die folgenden Schritte:
das Zugangsendgerät sendet ein Paket des Link Control Protocol LCP, das private Informationen (" 123456") führt, zu einem Breitband-Zugangsserver BAS;
das Zugangsendgerät empfängt ein LCP-Antwortpaket von dem BAS, wobei das LCP-Antwortpaket verschlüsselte private Informationen ("abcdet") führt, die in dem BAS **durch** Verschlüsseln der privaten Informationen unter Verwendung eines vereinbarten Verschlüsselungsalgorithmus erhalten werden;
das Zugangsendgerät verschlüsselt die privaten Informationen unter Verwendung des vereinbarten Verschlüsselungsalgorithmus; und
das Zugangsendgerät vergleicht die **durch** das Zugangsendgerät unter Verwendung des vereinbarten Verschlüsselungsalgorithmus erhaltenen verschlüsselten privaten Informationen ("abcdet") mit den in dem Antwortpaket geführten verschlüsselten privaten Informationen, und wenn die beiden verschieden sind, wird ein Einwählprozess zu dem BAS beendet oder eine Strecke zu dem BAS entfernt,
wobei das LCP-Paket ein Heartbeat-Paket des Point-To-Point Protocol (PPP) ist.

2. Verfahren nach Anspruch 1, **dadurch gekennzeichnet, dass** es vor dem Senden des LCP-Pakets, das die privaten Informationen führt, zu dem BAS ferner Folgendes umfasst:
das Zugangsendgerät fängt ein LCP-Paket an den BAS von einem Client ab und fügt die privaten Informationen in das abgefangene LCP-Paket ein.

3. Verfahren nach Anspruch 2, **dadurch gekennzeichnet, dass**
das Beenden des Einwählprozesses zu dem BAS oder das Entfernen der Strecke zu dem BAS ferner Folgendes umfasst:
das Zugangsendgerät verwirft das LCP-Antwortpaket; und
der Client beendet den Einwählprozess oder entfernt die Strecke, wenn das LCP-Antwortpaket nicht empfangen wird.

4. Verfahren nach Anspruch 1 oder 2, **dadurch gekennzeichnet, dass** die privaten Informationen durch einen Optionseintrag des LCP-Pakets geführt werden.

5. Verfahren nach einem der Ansprüche 1 bis 4, **dadurch gekennzeichnet, dass** die privaten Informationen eine zufällig durch das Zugangsendgerät erzeugte Zeichenkette sind.

6. Zugangsendgerät, **dadurch gekennzeichnet, dass** es Folgendes umfasst:
ein Privatinformations-Übertragungsmodul, das dafür ausgelegt ist, ein Paket, das private Informationen ("123456") führt, zu einem Breitband-Zugangsserver BAS zu senden und ein von dem BAS zurückgegebenes Antwortpaket zu empfangen, wobei das Antwortpaket verschlüsselte private Informationen ("abcdef") führt, die durch den BAS gemäß einem vereinbarten Verschlüsselungsalgorithmus erhalten werden; und
ein Bestimmungsverarbeitungsmodul, das dafür ausgelegt ist, zu bestimmen, ob die in dem Antwortpaket geführten verschlüsselten privaten Informationen mit durch das Zugangsendgerät unter Verwendung eines vereinbarten Verschlüsselungsalgorithmus erhaltenen verschlüsselten privaten Informationen ("abcdef") identisch sind oder
nicht, und wenn nicht, einen Einwählprozess zu dem BAS zu beenden oder eine Strecke zu dem BAS zu entfernen;
wobei das Paket ein Paket des Link Control Protocol LCP ist, das Antwortpaket ein LCP-Antwortpaket ist und das LCP-Paket ein Heartbeat-Paket des Point-To-Point Protocol (PPP) ist.

7. Zugangsendgerät nach Anspruch 6, **dadurch gekennzeichnet, dass** es ferner Folgendes umfasst:
ein Privatinformations-Erzeugungs- und Verschlüsselungsmodul, das dafür ausgelegt ist, eine Zufallszeichenkette als die privaten Informationen des Zugangsendgeräts zu erzeugen und die Zufallszeichenkette unter Verwendung eines vereinbarten Verschlüsselungsalgorithmus zu verschlüsseln.

8. Zugangsendgerät nach Anspruch 6 oder 7, wobei das Zugangsendgerät eine Remote Terminal Unit (RTU) oder ein Home Gateway (HGW) ist.

## Revendications

1. Procédé de rattachement d'un terminal d'accès à un opérateur, **caractérisé en ce qu'**il comprend les étapes consistant à :
transmettre à un serveur d'accès à large bande, dit BAS, au moyen du terminal d'accès, un paquet de protocole de commande de liaison, dit LCP, acheminant des informations privées ("123456") ;
recevoir du BAS, au moyen du terminal d'accès, un paquet de réponse LCP, le paquet de réponse LCP acheminant des informations privées chiffrées ("abcdef") obtenues dans le BAS en chiffrant les informations privées par un algorithme de chiffrement convenu ;
chiffrer, au moyen du terminal d'accès, les informations privées par l'algorithme de chiffrement convenu ; et
comparer, au moyen du terminal d'accès, les informations privées chiffrées ("abcdef") obtenues au moyen du terminal d'accès par l'algorithme de chiffrement convenu aux informations privées chiffrées acheminées dans le paquet de réponse et, en cas de différence, mettre fin à un processus d'accès commuté au BAS ou supprimer une liaison avec le BAS,
le paquet LCP étant un paquet de pulsation de protocole point à point (PPP).

2. Procédé selon la revendication 1, **caractérisé en ce qu'**il comprend en outre, préalablement à l'étape consistant à transmettre au BAS le paquet LCP acheminant les informations privées, l'étape consistant à :
intercepter, au moyen du terminal d'accès, un paquet LCP en provenance d'un client et à destination du BAS, et insérer les informations privées dans le paquet LCP intercepté.

3. Procédé selon la revendication 2, **caractérisé en ce que** l'étape consistant à mettre fin au processus d'accès commuté au BAS ou à supprimer la liaison avec le BAS comprend en outre les étapes consistant à :
rejeter, au moyen du terminal d'accès, le paquet de réponse LCP ; et
mettre fin au processus d'accès commuté ou supprimer la liaison, par le client, si le paquet de réponse LCP n'est pas reçu.

4. Procédé selon la revendication 1 ou 2, **caractérisé en ce que** les informations privées sont acheminées par une entrée d'option du paquet LCP.

5. Procédé selon l'une quelconque des revendications 1 à 4, **caractérisé en ce que** les informations privées constituent une chaîne de caractères générée aléatoirement par le terminal d'accès.

6. Terminal d'accès, **caractérisé en ce qu'**il comprend :
un module de transmission d'informations privées, conçu pour transmettre à un serveur d'accès à large bande, dit BAS, un paquet acheminant des informations privées ("123456"), et recevoir un paquet de réponse renvoyé par le BAS, le paquet de réponse acheminant des informations privées chiffrées ("abcdef") obtenues par le BAS conformément à un algorithme de chiffrement convenu ; et
un module de traitement de détermination, conçu pour déterminer si les informations privées chiffrées acheminées dans le paquet de réponse sont identiques aux informations privées chiffrées ("abcdef") obtenues au moyen du terminal d'accès par un algorithme de chiffrement convenu et, dans le cas contraire, mettre fin à un processus d'accès commuté au BAS ou supprimer une liaison avec le BAS ;
le paquet étant un paquet de protocole de commande de liaison, dit LCP, le paquet de réponse étant un paquet de réponse LCP, et le paquet LCP étant un paquet de pulsation de protocole point à point (PPP).

7. Terminal d'accès selon la revendication 6, **caractérisé en ce qu'**il comprend en outre :
un module de génération et de chiffrement d'informations privées, conçu pour générer une chaîne de caractères aléatoire constituant les informations privées du terminal d'accès, et chiffrer la chaîne de caractères aléatoire par un algorithme de chiffrement convenu.

8. Terminal d'accès selon la revendication 6 ou 7, le terminal d'accès étant un terminal distant (RTU) ou une passerelle domestique (HGW).
